# FASCICULE DE BREVET EUROPEEN

(11) **EP 2 701 398 B1**
(45) Date de publication et mention de la délivrance du brevet: **26.05.2021**
(21) Numéro de dépôt: 13181147.3
(22) Date de dépôt: 21.08.2013
(51) Int. Cl.: H04N 21/845, H04N 21/2743, H04N 21/2343

(54) **Procédé de traitement d'un flux multimédia, serveur et programme d'ordinateur correspondants**
Verarbeitungsverfahren eines Multimediaflusses, entsprechende Server und Computerprogramm
Method for processing a multimedia stream, corresponding server and computer program

(30) Priorité: 23.08.2012 FR 1257965
(43) Date de publication de la demande: 26.02.2014
(73) Titulaire: ORANGE, 75015 Paris (FR)
(72) Inventeur: Moncomble, Ghislain, 22300 LANNION (FR); Brun, Arnaud, 92100 BOULOGNE BILLANCOURT (FR); Floury, Cédric, 22700 PERROS GUIREC (FR)
(74) Mandataire: Vidon Brevets & Stratégie

(56) Documents cités:
- EP-A2- 1 845 727
- WO-A1-01/10127
- WO-A1-2011/009101
- US-A1- 2003 093 790
- US-A1- 2006 130 121
- US-A1- 2007 035 612
- US-A1- 2011 130 087
- US-A1- 2011 307 924
- US-A1- 2012 042 091
- US-B1- 8 196 168

## Description

### 1. DOMAINE DE L'INVENTION

La présente invention se rapporte de manière générale au domaine des télécommunications, et en particulier, au domaine de la vidéo.

Plus précisément, l'invention concerne le traitement de flux multimédia ou vidéo acquis par un particulier, depuis un terminal mobile et notamment de flux vidéo relatifs à des évènements réels, en particulier des flux captant des scènes larges, comme des concerts, des conférences ou d'autres faits d'actualité par exemple.

### 2. ART ANTERIEUR

Avec l'essor des terminaux mobiles munis de moyens d'enregistrement et de diffusion de flux multimédia, de nombreux utilisateurs de terminaux mobiles aiment filmer par eux-mêmes des évènements auxquels ils assistent pour les faire partager à leurs proches, par exemple par diffusion d'un évènement en direct via un réseau mobile.

Cependant, l'utilisateur d'un simple terminal mobile est limité à un seul point de vue et ne peut souvent pas suivre de façon optimale l'événement. En effet, il est souvent trop éloigné de la scène principale, et mêlé à une foule, ce qui génère en général de nombreuses perturbations sonores ou visuelles.

De plus, il n'est pas possible à un utilisateur noyé au sein d'une foule de choisir à la volée l'angle de vue adéquat, comme le ferait un opérateur professionnel à l'aide d'une table de mixage vidéo (lui permettant de choisir l'angle de vue adéquat parmi une pluralité de caméras), ne fut ce que du fait de la taille réduite des terminaux mobiles.

La demande US 2007/035612 A1 (KORNELUK JOSE E ET AL), publiée le 15-02-2007, divulgue l'enregistrement d'un évènement en direct par des utilisateurs avec leurs téléphones mobiles, le découpage du flux multimédia en séquences consécutives, et la requête d'un autre point de vue acquis par un autre utilisateur.

La présente demande d'invention vise donc à permettre à un utilisateur ne possédant pas de matériel vidéo performant ou de compétence technique particulière dans le domaine de la vidéo, de produire un flux vidéo de bonne qualité, soit pour son propre usage, soit pour en faire bénéficier un tiers ou plusieurs tiers.

### 3. EXPOSE DE L'INVENTION

L'invention propose une solution nouvelle qui ne présente pas l'ensemble de ces inconvénients de l'art antérieur. En effet, l'invention concerne un procédé de traitement tel que défini par la revendication 1.

Ainsi l'invention permet de découper un flux en cours d'acquisition, ou déjà acquis par un terminal, en séquences ayant des caractéristiques de diffusion différentes, notamment pour l'utilisateur du terminal, de façon à pouvoir ensuite les traiter différemment les unes des autres au moment de la diffusion.

L'invention permet de définir, en association avec chacune des séquences, une caractéristique déterminant une restriction de l'usage qui devra être fait ultérieurement de la séquence. Ainsi, certaines séquences pourront être caractérisées comme étant uniquement à vocation d'utilisation dans un cadre privé de l'utilisateur du terminal ayant acquis le flux, ou au contraire être destinées à une diffusion plus large, par exemple vers des tiers non identifiés.

Selon les modes de réalisation de l'invention, le procédé de traitement peut être mis en œuvre sur le terminal de communication, par exemple par une application dédiée, ou depuis un serveur de traitement distant, à réception du flux diffusé par le terminal.

Selon un mode de réalisation particulier de l'invention, ladite caractéristique de diffusion associée à une séquence est définie à partir d'informations appartenant au groupe comprenant :
- un paramètre de prise de vue ;
- un paramètre de confidentialité en fonction d'une reconnaissance d'objet dans la séquence.

Ainsi, le procédé de l'invention permet de définir automatiquement la caractéristique de diffusion d'une séquence en tenant compte du contexte de captation de la séquence vidéo, par exemple de la nature (caméra frontale ou dorsale, ...) des moyens d'acquisition, de la qualité de la captation (les capteurs des moyens de captation pouvant avoir des résolutions différentes), de la position, de l'orientation et/ou de l'angle de vue des moyens de captation, ou du contenu de la séquence vidéo (détection et/ou reconnaissance de visage ou d'éléments prédéfinis).

Selon une caractéristique de l'invention, le procédé de traitement comprend en outre une étape préalable d'identification dudit événement délivrant une information d'identification dudit événement comprenant au moins une délimitation temporelle et géographique dudit événement.

Ainsi l'invention permet d'associer à un événement donné un périmètre à la fois temporel et géographique, de façon à pouvoir distinguer deux événements proches, temporellement ou géographiquement (par exemple deux concerts à la même heure dans un festival, ou deux événements successifs à un même endroit).

Selon une caractéristique particulière de l'invention, le procédé de traitement comprend une étape préalable de prise en compte d'une inscription dudit terminal.

Ainsi l'invention offre l'avantage à un utilisateur d'un terminal d'acquisition d'un flux de pouvoir choisir s'il souhaite ou non bénéficier d'une optimisation du flux acquis/ en cours d'acquisition, pour un événement spécifique, ou de manière générale pour tout événement pouvant bénéficier de cette optimisation. De cette manière, certains modes de réalisation, où l'inscription du terminal n'est pas limitée à un événement, permettent une optimisation du flux pour l'utilisateur, pour un certain nombre d'événements, nécessitant simplement une validation/ confirmation par l'utilisateur de la mise en œuvre du procédé de traitement de l'invention, sans inscription préalable spécifique à l'événement en question.

Selon une caractéristique particulière de l'invention, ladite inscription dudit terminal comprend au moins une information d'identification d'un événement.

De tels modes de réalisation, où l'inscription du terminal est relative à l'événement, permettent à l'utilisateur de bénéficier d'une optimisation du flux acquis par son terminal uniquement à la demande, en réduisant ainsi les coûts financiers associés et n'utilisant le procédé de traitement de l'invention que lorsqu'il considère qu'une optimisation est souhaitable (par exemple en regard de l'importance qu'il attache à l'événement).

Selon une caractéristique particulière de l'invention, le procédé de traitement comprend une étape de synchronisation temporelle dudit flux avec une base de temps de référence.

Il peut notamment s'agir d'une synchronisation du terminal d'acquisition, effectuée lors de l'inscription du terminal, ou d'une synchronisation de chacun des flux média reçus, par le serveur de traitement, préalablement à l'étape de remplacement.

Par ailleurs, le procédé de traitement comprend une étape de remplacement, dans ledit premier flux, d'au moins une partie d'une première séquence associée à une caractéristique de diffusion prédéterminée par au moins une partie d'une deuxième séquence identifiée, à partir d'au moins une caractéristique de diffusion, d'au moins un second flux multimédia relatif audit évènement, ledit second flux étant distinct dudit premier flux, ladite partie de ladite deuxième séquence étant de même plage temporelle que ladite partie de ladite première séquence, ladite seconde partie étant sélectionnée en fonction de ladite caractéristique de diffusion prédéterminée associée à ladite première séquence, générant un flux multimédia optimisé.

Ainsi, lors d'une mise en œuvre de l'invention sur un serveur de traitement, par exemple, le procédé de l'invention permet à un serveur de générer un flux optimisé d'un événement à partir d'un flux acquis ou en cours d'acquisition depuis un terminal, l'optimisation étant effectuée en tenant compte des caractéristiques de diffusion des séquences du flux. Par exemple, seules seront remplacées des parties de certaines séquences ayant une caractéristique de diffusion prédéterminée, par exemple des séquences dites à caractère public. L'invention offre donc notamment l'avantage de conserver systématiquement certaines séquences, associées à une caractéristique de diffusion particulière, comme des séquences relatives à un cadre privé.

De plus, selon l'invention, les séquences de remplacement issues du second flux sont également sélectionnées en fonction de la caractéristique de diffusion prédéterminée. Selon un mode de réalisation, il peut ainsi s'agir d'un remplacement par une partie d'une séquence ayant une caractéristique de diffusion identique à celle de la séquence acquise (de façon par exemple à ne remplacer que les séquences susceptibles d'être diffusées largement, dites à caractère public, et à ne pas introduire dans le flux de séquence à caractère privé en provenance d'un second flux reçu d'un autre utilisateur).

Selon un autre mode de réalisation, il peut s'agir au contraire d'un remplacement par une partie d'une séquence ayant une caractéristique de diffusion différente (de façon par exemple à réaliser un filtrage de certaines séquences associées à une caractéristique de diffusion particulière, par exemple en remplaçant les séquences à caractère privé du flux par des séquences sans restriction de diffusion en provenance d'autres flux, lorsque le flux optimisé est destiné à une large diffusion, par exemple sur un réseau social).

Certains modes de réalisation, dans lesquels les flux vidéo sont transmis en continu, et où le flux vidéo optimisé est généré « à la volée », permettent à l'utilisateur de disposer d'un flux optimisé pendant le déroulement de l'événement.

Selon les modes de réalisation de l'invention, l'étape de remplacement est effectuée sur des flux pré-traités par des terminaux d'acquisition, et en particulier découpés, et/ou est précédée d'une étape de découpage sur le serveur d'au moins un des flux reçus.

Selon une caractéristique particulière de l'invention, ladite étape de remplacement est mise en œuvre périodiquement sur ledit premier flux.

Ainsi l'invention permet de réitérer, pour un même flux acquis ou en cours d'acquisition, le remplacement de parties d'une séquence par d'autres parties, de façon à améliorer l'optimisation du flux généré.

En particulier, dans ce mode de réalisation, la période de remplacement peut être choisie de façon à privilégier une rapidité de génération du flux vidéo optimisé, ou une fluidité des séquences, ou encore à permettre des remplacements plus nombreux dans une séquence.

Selon une caractéristique particulière de l'invention, ladite étape de remplacement comprend une étape de validation du remplacement de ladite première partie par ladite seconde partie, fonction d'une comparaison des contenus desdites parties de séquence.

Ainsi, le procédé de l'invention permet de générer un flux optimisé d'un événement, l'optimisation étant effectuée non seulement en tenant compte des caractéristiques de diffusion des séquences du flux acquis ou en cours d'acquisition par le terminal mais également en fonction d'une comparaison entre une partie de la séquence acquise avec des parties de séquence en provenance d'un autre flux vidéo.

La comparaison peut en particulier tenir compte de la qualité des parties de séquence (par exemple un niveau de bruit sonore ou visuel), ou privilégier certaines largeurs de champ ou certains points de vue ou encore les flux reçus de certains équipements particuliers, considérés comme plus adaptés, par exemple un matériel professionnel, tout en conservant inchangées les séquences ayant un caractère personnel (par exemple un gros plan d'un proche de l'utilisateur du terminal, filmé par ce dernier).

Selon une caractéristique particulière de l'invention, ladite étape de remplacement comprend une étape d'homogénéisation du codage de ladite partie de ladite deuxième séquence avec le codage de ladite partie de ladite première séquence.

Ainsi l'invention permet d'obtenir un codage uniforme du flux optimisé, de façon à faciliter son utilisation ultérieure.

Selon une caractéristique particulière de l'invention, le procédé comprend en outre une étape de diffusion dudit flux multimédia optimisé vers au moins un terminal destinataire.

Ainsi l'invention permet de faire bénéficier un tiers du flux média optimisé, et donc par exemple d'un flux de qualité supérieure à celle du flux média acquis, et ceci de façon transparente pour le tiers.

Selon encore un autre aspect, l'invention concerne un serveur de traitement tel que défini par la revendication 10.

Un tel mode de réalisation offre l'avantage de permettre une compatibilité de l'invention pour le traitement de flux acquis ou reçus de terminaux de communication ne possédant pas de propres moyens de découpage.

Le serveur de traitement de l'invention peut également comprendre des moyens de mise en œuvre du procédé de traitement décrit précédemment, dans l'un quelconque de ses différents modes de réalisation.

Selon un autre aspect, l'invention concerne un programme d'ordinateur tel que défini par la revendication 11.

### 4. LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels:
- les figures 1a et 1b présentent un schéma du principe général de l'invention, dans deux modes de réalisation éventuellement complémentaires ;
- la figure 2 illustre un mode de réalisation particulier de l'invention ;
- la figure 3 illustre le fonctionnement dynamique du procédé de l'invention dans un mode de réalisation compatible avec le mode de réalisation présenté en figure 2;
- la figure 4 décrit un exemple d'un terminal du réseau de communication selon l'invention ;
- la figure 5 décrit un exemple d'un serveur du réseau de communication selon l'invention.

### 5. DESCRIPTION D'UN MODE DE REALISATION DE L'INVENTION

### 5.1 Principe général

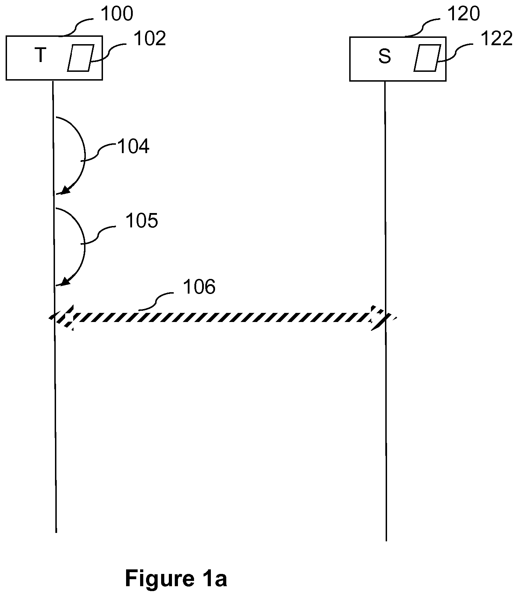

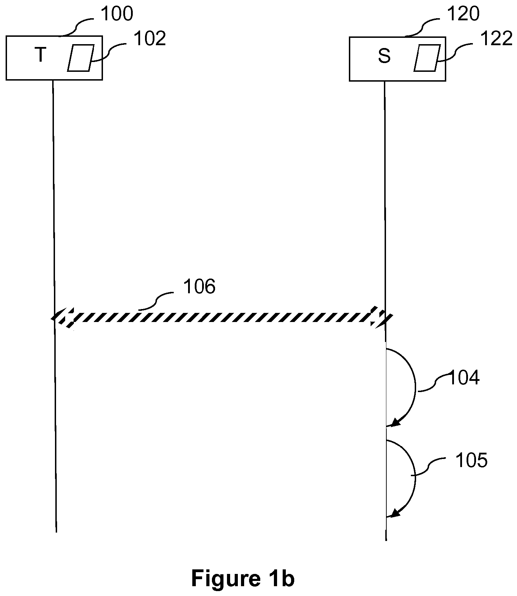

Les figures 1a et 1b présentent le principe général de l'invention, dans deux modes de réalisation éventuellement complémentaires.

L'invention vise à permettre à un utilisateur générant une vidéo relative à un fait d'actualité auquel il assiste, comme un spectacle (un concert notamment), pour par exemple la diffuser à un de ses correspondants (ami, famille, ...), d'obtenir une vidéo de meilleure qualité que celle qu'il a initialement obtenue seul, en lui permettant de bénéficier de façon transparente des points et angles de vue du même spectacle acquis par différents autres spectateurs, tout en conservant l'aspect personnel de sa diffusion.

En effet, il est très fréquent que de nombreux spectateurs filment en même temps la même scène depuis différentes positions. Un groupe de spectateurs effectuant chacun séparément une retransmission dispose donc potentiellement, dans son ensemble, au moins en terme de la diversité de points de vue, des mêmes capacités techniques qu'un opérateur professionnel filmant un tel événement à l'aide de plusieurs terminaux d'acquisition vidéo.

Plus précisément, le principe de l'invention consiste à détecter, par exemple par le biais d'une application dédiée 102 téléchargée préalablement sur un terminal de communication 100, le début de la diffusion, par le terminal 100, d'un flux multimédia acquis ou en cours d'acquisition par ce terminal, et relatif à un événement particulier, et à découper ce flux en séquences consécutives, selon au moins une caractéristique de diffusion, associée à chacune des séquences, qui seront ensuite optimisées.

L'invention permet de distinguer, à l'aide de cette caractéristique de diffusion, les séquences à caractère personnel, des autres séquences, dites à caractère public.

La caractéristique de diffusion associée à une séquence ( caractère privé ou public) est définie à partir d'informations telles qu'une caractéristique d'un moyen d'acquisition de la séquence (caméra frontale ou dorsale du terminal mobile), par exemple sa position, sa résolution, ou son orientation, une géo-localisation du terminal de communication par rapport à un lieu de déroulement de l'événement (une scène d'un spectacle par exemple), une caractéristique relative au contenu de la séquence vidéo (détection et/ou reconnaissance de visage ou d'éléments prédéfinis), un angle de vue.

Ainsi la caractéristique de diffusion d'une séquence est définie à partir du contexte de captation de la séquence vidéo ou relative au contenu de la séquence vidéo.

Ainsi, dans un mode particulier de réalisation de l'invention, une séquence dans laquelle une focalisation est effectuée sur un visage, assimilé au visage d'un proche, peut être considérée comme une séquence ayant un caractère privé. Une telle focalisation peut par exemple être détectée par un composant logiciel en charge de la reconnaissance de visage de l'application (102, 122).

De même, la présence dans la séquence d'éléments prédéterminés relatifs à l'événement, comme par exemple un repère sur la scène d'un événement de type spectacle, ou encore un paysage connu sur un évènement de type course maritime, ou encore un visage préenregistré comme celui d'un acteur de l'événement, pourront indiquer le caractère « public» de la séquence. D'autres éléments, prédéfinis par l'utilisateur du terminal (par exemple une image du visage d'un proche) peuvent au contraire permettre de décider du caractère « privé » d'une séquence.

Dans certains modes de réalisation, un pré-traitement du flux à optimiser est effectué par le terminal, avant le traitement et l'optimisation du flux sur un serveur distant.

Ainsi, dans le mode de réalisation illustré en figure la, l'étape de détection 104 est mise en œuvre par le terminal 100, par exemple par le biais d'une application dédiée 102 installée préalablement sur le terminal, par exemple par téléchargement. Cette application peut également prendre en charge l'étape de découpage 105 du flux en séquences, avant d'émettre (étape 106) ces séquences vers une application dédiée 122, située sur un serveur distant 120. Ce serveur distant 120 prend ensuite en charge la génération d'un flux optimisé, comme décrit plus en détails ci-dessous.

Un tel mode de réalisation, dans lequel l'étape de découpage 105 est mise en œuvre sur le terminal, peut permettre de déduire des caractéristiques de diffusion à partir de l'état ou de l'utilisation de certains moyens de caractérisation du terminal, au moment de l'acquisition.

Ainsi, dans certains modes de réalisation, l'utilisation d'une caméra frontale pourra être par défaut considérée comme le signe d'une diffusion privée, sans analyse du contenu de la séquence associée, et le changement de caméra, pour une acquisition par une caméra dorsale du terminal, marquera le début d'une nouvelle séquence dont la caractéristique de diffusion, a priori de caractère public, pourra être déterminée/confirmée par exemple en étudiant son contenu.

De même, l'utilisation d'une boussole et/ou d'un gyroscope du terminal 100 peut permettre de détecter une orientation d'un viseur d'une caméra vers la scène d'un événement et donc d'associer à la séquence correspondante un caractère public, sans nécessairement analyser le contenu de la séquence.

Il peut être également tenu compte du point de vue, c'est-à-dire de la géo-localisation précise du terminal (et donc de son utilisateur) lors de la prise de vue, et ses variations en fonction du temps si le terminal 100 est en mouvement, et de la direction de la prise de vue du terminal 100.

Dans d'autres modes de réalisation, comme illustré en figure 1b, l'étape de découpage 105 peut être entièrement effectuée par l'application dédiée 122 située sur le serveur distant 120. Dans ce cas, l'application 102 dédiée installée préalablement sur le terminal 100, détecte le début de diffusion du flux et l'émet (étape 106), sans découpage, vers l'application dédiée située sur le serveur distant 120. Le serveur distant 120 détecte à son tour, lors d'une étape de détection 104, le début de diffusion du flux et met en œuvre l'étape de découpage 105 du flux en séquences.

Un tel mode de réalisation est particulièrement adapté à un découpage en séquences dans lequel les caractéristiques de diffusion sont déduites de la présence dans les séquences d'éléments prédéterminés relatifs à l'évènement.

Dans ce cas, l'étape d'émission 106 du flux peut comprendre une étape d'émission d'informations complémentaires aux caractéristiques de diffusion, par exemple des informations relatives à un angle de vue, à la caméra utilisée (si le terminal dispose de plusieurs caméras (par exemple une caméra frontale et une caméra dorsale), à la géo-localisation fine de l'utilisateur, ...

Dans certains modes de réalisation de l'invention, l'émission de ces informations complémentaire peut être effectuée de façon parallèle à l'émission du flux. Dans ce cas, les informations complémentaires émises seront synchronisées temporellement avec le flux émis, de façon à pouvoir être indexées temporellement avec le flux.

Dans d'autres modes de réalisation, l'émission des informations complémentaire peut être effectuée lors de l'émission du flux, en particulier grâce à l'insertion et/ou au positionnement d'éléments de signalisation du flux émis (par exemple par un codage orthogonal).

Dans encore d'autres modes de réalisation de l'invention, l'étape de découpage 105 peut être mise successivement en œuvre par l'application dédiée 102 installée sur le terminal, au niveau du terminal, puis par l'application dédiée 122 située sur le serveur distant 120. Ces modes de réalisation permettent de bénéficier à la fois des capacités de détermination d'une caractéristique de diffusion du terminal et du serveur.

Dans certains modes de réalisation, notamment lorsque l'étape de découpage est effectuée sur le terminal, l'étape d'émission 106 du flux peut être constituée d'une pluralité de sous-étapes d'envoi, chacune comprenant l'envoi d'une séquence et de la caractéristique de diffusion associée, ou comprendre une sous-étape de réassemblage du flux découpé en séquences et une étape d'envoi du flux réassemblé. Dans ce cas, à chacune des séquences réassemblées peut être associé un marqueur horodaté, permettant au serveur en réception d'identifier les différentes séquences. Les marqueurs et les caractéristiques de diffusion associées à une séquence peuvent être insérés dans le flux ou transmis séparément au flux.

### 5.2 Présentation d'un mode particulier de réalisation de l'invention

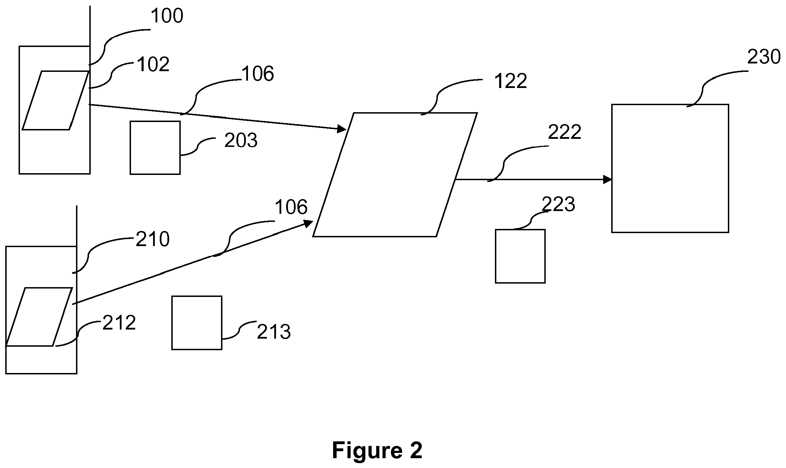

Dans le mode particulier de réalisation illustré en figure 2, le flux multimédia/vidéo acquis depuis un terminal 100 puis détecté et découpé par une application 102 installée sur le terminal 100 est émis, lors d'une étape d'émission 106, vers une application 122 dédiée située sur un serveur distant.

Celui-ci qui détecte à son tour le début de diffusion des flux multimédia (203, 213) et se charge de monter les contenus multimédia (203, 213) en provenance de plusieurs terminaux (100, 210) pour générer un contenu multimédia optimisé 223, par exemple de meilleure qualité, comportant des séquences issues de l'un ou l'autre des flux multimédia (203, 213), certaines séquences d'un premier flux multimédia 203 étant remplacées au moins partiellement par des parties de séquences d'un second flux multimédia 213.

Le flux optimisé 223 ainsi obtenu peut ensuite être émis (étape 222) vers un autre terminal 230. Il peut s'agir de l'un des terminaux ayant généré l'un des flux vidéo, lorsque son utilisateur souhaite disposer pour son propre usage d'un flux optimisé, ou d'un terminal tiers, par exemple d'un terminal destinataire désigné par un utilisateur du premier terminal 100.

Les terminaux (100, 210) peuvent consister par exemple en un terminal mobile, par exemple un terminal de téléphonie comportant des moyens d'acquisition d'un flux vidéo, en particulier une tablette (notamment lorsque l'étape de découpage 105 est mise en œuvre sur le terminal lui-même), ou une caméra vidéo, et être munis de moyens de communication avec un réseau de communication, par exemple un accès mobile 3G à un réseau mobile. Ainsi, le procédé de l'invention permet à un utilisateur ne possédant pas de compétence spécifique dans le domaine de la vidéo, de proposer une retransmission de bonne qualité optimisée d'un évènement.

De plus, en remplaçant certaines parties du flux acquis par un terminal par des parties de qualité supérieure, le procédé de l'invention permet à un utilisateur d'un terminal de capacité vidéo médiocre, de bénéficier des capacités vidéo de terminaux plus performants d'autres utilisateurs.

Dans certains modes de réalisation, le procédé permet de plus à un utilisateur de conserver le caractère personnel de sa retransmission, puisque seules les séquences publiques de sa propre diffusion seront mutualisées.

Selon certains modes de réalisation, le procédé de l'invention permet également à chaque utilisateur filmant un évènement d'actualité de bénéficier automatiquement d'une couverture multiple, en termes de points de vue, de l'évènement.

Selon encore un mode de réalisation particulier, le procédé de l'invention permet de limiter dans certains cas la masse de flux vidéo diffusés ayant trait à un évènement et ainsi d'éviter de saturer le réseau de communication utilisé, en offrant à plusieurs utilisateurs la possibilité de diffuser un même flux optimisé. Par exemple, certains utilisateurs, dont la vidéo ne comporte que des séquences à caractère public, peuvent partager le même flux optimisé, limitant ainsi le nombre de flux effectivement diffusés pour un même événement. Ainsi, par exemple, au lieu de diffuser dix flux distincts relatifs à un même événement, le procédé selon certains modes de réalisation particuliers de l'invention permet de ne diffuser que cinq flux optimisés distincts.

Par ailleurs, il est à noter que le procédé selon les différents modes de réalisation de l'invention permet d'offrir une solution de mise en œuvre simple pour un utilisateur, et au moins dans certains modes de réalisation, de proposer un modèle économique rentable aux organisateurs d'un événement.

### 5.3 Description du fonctionnement dynamique du procédé de l'invention, dans un mode particulier de réalisation

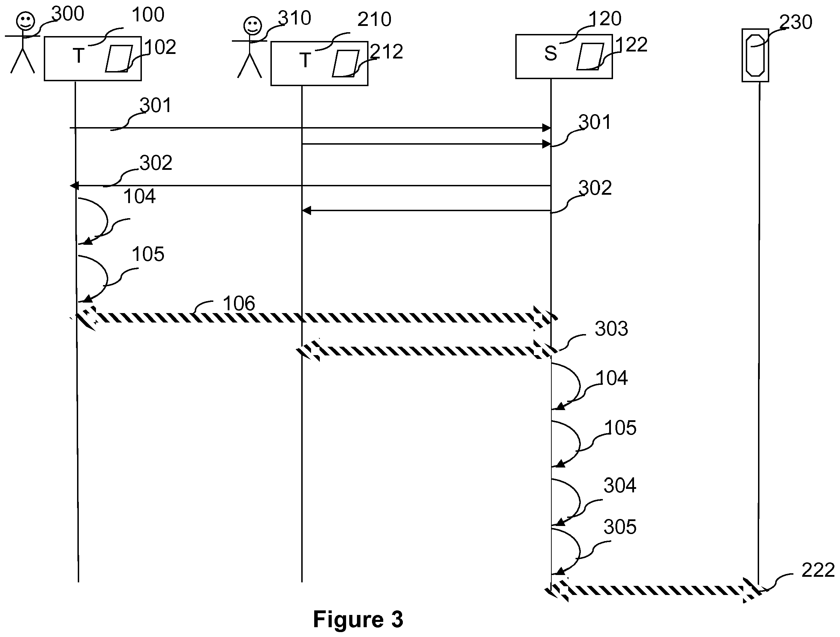

On décrit à présent en liaison avec la figure 3, les étapes du procédé de l'invention selon un mode particulier de réalisation, compatible avec le mode de réalisation présenté en figure 2. Dans le mode de réalisation présenté en figure 3, le procédé est mis en œuvre pour la couverture vidéo d'un concert.

Le procédé comprend, préalablement au déroulement du concert, une étape d'identification de l'événement que constitue le concert, par l'application 122 s'exécutant sur un serveur 120 selon l'invention. Cette étape d'identification, initiée par exemple par l'organisateur du concert, comprend notamment l'obtention de la date et l'heure de début et de fin du concert, et sa localisation géographique. Elle peut également comprendre l'obtention d'autres informations comme une nature de l'événement (concert en solo ou en groupe, fait d'actualité, manifestation de rue, conférence, course terrestre ou maritime, manifestation aérienne....), un rayon ou les coordonnées d'une zone de couverture géographique (correspondant par exemple à la taille de la salle où se déroule le concert, à une distance par rapport à un itinéraire enregistré, par exemple l'itinéraire prévu pour une course terrestre ou maritime). De telles informations permettent notamment de distinguer un premier événement d'un second évènement proche temporellement et/ou géographiquement.

Dans le mode de réalisation illustré, le procédé comprend également une étape de prise en compte 301 d'une inscription du terminal 100 d'un utilisateur 300 souhaitant générer un flux vidéo relatif au concert.

Cette inscription peut être effectuée, par géo-localisation, pour tout terminal (100,210) entrant dans la zone de couverture géographique affectée à l'événement, dans une plage horaire proche de la plage horaire affectée à un événement, de façon automatique ou après interrogation du terminal (100, 210) par l'application 122. Le téléchargement d'une application dédiée (102, 212) destinée à dialoguer avec l'application 122 située sur le serveur 120, par exemple une application disponible sur un catalogue électronique, tel que l'Android Market® ou l'Apple store®, peut en particulier être proposée à l'utilisateur (300,310) du terminal (100, 210) lors de cette interrogation.

Il peut s'agir également d'une inscription effectuée par le terminal (100, 210) lui-même, à l'initiative de l'utilisateur (300, 310) ou d'une application dédiée s'exécutant sur le terminal (100, 210), par exemple une application téléchargée préalablement sur le terminal. Une telle application peut en particulier mémoriser les évènements auxquels un terminal est inscrit.

Dans d'autres modes de réalisation de l'invention, l'inscription d'un terminal peut être effectuée, non pas au moment de l'évènement, mais préalablement à celui-ci, par exemple via un service Internet dédié ou une application mobile dédiée. Ainsi, l'inscription du terminal (100, 210) peut avantageusement être réalisée lors de l'inscription (en ligne ou papier) d'un utilisateur (300, 310) du terminal (100, 210) à l'évènement. Par exemple, lors de l'achat en ligne d'un billet pour le spectacle concerné, un composant logiciel peut demander à l'utilisateur le numéro de son téléphone mobile, en lui précisant que cela lui permettra d'accéder au service. En variante, cette inscription complémentaire peut être une option payante.

Dans le mode de réalisation présenté en figure 3, une application 102 est téléchargée par l'utilisateur 300 lors de son inscription.

Dans le mode de réalisation illustré, le procédé comprend de plus, lors de l'inscription d'un terminal (100, 210), une étape de synchronisation temporelle 302 du terminal (100, 210) avec une source temporelle de référence, par exemple une horloge interne au serveur 120. Dans d'autres modes de réalisation, cette étape de synchronisation peut être effectuée, pour l'ensemble des terminaux inscrits, juste avant le début de l'événement identifié.

Le procédé comprend de plus une étape de détection 104 du début de diffusion d'un flux multimédia depuis le terminal (100, 210). Dans le mode de réalisation illustré, l'application dédiée (102, 212) est activée automatiquement lors de l'événement, par exemple à la date et à l'heure de début de l'événement, et/ou lorsque la localisation du terminal (100, 210) est située dans le périmètre géographique de l'événement, de façon à se mettre en attente du début de la diffusion d'un flux par le terminal.

Dans une variante de l'invention, l'application peut être activée un peu avant ou après le début de l'événement, par exemple en fonction d'une marge horaire prédéfinie, pour tenir compte d'éventuels retards, fréquents dans la plupart des évènements, ou au contraire pour disposer d'une marge de sécurité temporelle.

Dans certains modes particuliers de réalisation, cette marge d'horaire et le périmètre géographique de l'événement peuvent être définis par défaut, ou selon la nature des événements, par exemple selon qu'il s'agisse d'un spectacle, ou de la retransmission d'une course maritime ou terrestre ou d'un ballet aérien. Dans d'autres modes de réalisation, ces valeurs peuvent aussi être particulières à un événement et définies, par exemple, par l'organisateur de l'évènement.

Selon l'invention, le procédé comprend également, une étape de découpage 105 du flux relatif à l'événement, mise en œuvre lors ou après l'acquisition du flux par le terminal 100, en séquences consécutives associées chacune à au moins une caractéristique de diffusion. Comme expliqué en liaison avec les figures la et 1b, cette étape de découpage peut être effectuée par l'application 102 située sur le terminal 100 ou par l'application 122 située sur le serveur 120.

Le procédé comprend en outre une étape de réception 303, par l'application 122 dédiée située sur le serveur 120, d'au moins un second flux multimédia relatif audit événement et distinct du premier flux. Ce second flux multimédia peut par exemple provenir d'un second terminal 300 également inscrit.

En particulier, le procédé peut comprendre en outre une étape d'identification 304, pour les premier et second flux, d'une pluralité de séquences consécutives, à partir d'au moins une caractéristique de diffusion, associée à chacune des séquences.

Dans le mode de réalisation présenté, l'étape d'identification 304 comprend en particulier une étape d'étalonnage temporel de chaque séquence vis-à-vis des instants d'acquisition, déterminant en particulier les instants de début et de fin d'acquisition de chaque séquence.

Le procédé comprend également une étape de remplacement 305, dans le premier flux, d'au moins une partie d'une première séquence associée à une caractéristique de diffusion prédéterminée par au moins une partie d'une deuxième séquence du second flux reçu, de même plage temporelle que la première partie, la seconde partie étant sélectionnée en fonction de la caractéristique de diffusion prédéterminée, générant un flux multimédia optimisé.

Selon les modes de réalisation de l'invention, cette étape de remplacement 305 peut être mise en œuvre par un opérateur, par exemple à la volée, ou automatiquement par l'application 122 s'exécutant sur le serveur 120.

En particulier, dans au moins un mode de réalisation de l'invention, la synchronisation temporelle des terminaux d'acquisition du premier flux et/ou du deuxième flux, préalablement à l'étape de détection du début de la diffusion des flux, et l'étalonnage temporel de chaque séquence permettent de ne tenir compte que de parties de séquences correspondant à une même plage temporelle d'acquisition, les séquences relatives à des flux reçus avec retard n'étant pas prises en considération par l'application 122 lors de l'étape de remplacement 305.

Lors de l'étape de remplacement 305, le remplacement d'une première partie de séquence d'un premier flux est effectué de façon conditionnelle, lorsque la caractéristique de diffusion de la séquence est égale à une caractéristique prédéterminée.

Dans certains modes de réalisation particuliers, il peut s'agir notamment du remplacement de séquences de caractère privé par des séquences de caractère public, dans le but d'obtenir un flux composé entièrement de séquences à caractère public, apte à être diffusé vers un ou plusieurs tiers quelconque(s).

Dans une variante, de tels modes de réalisation peuvent comprendre une étape de « floutage » ou d'opacification de certains éléments d'une séquence considérée comme publique, par exemple un visage ou un signe publicitaire présent dans une séquence considérée comme publique, du fait notamment d'une position de la caméra du terminal d'acquisition.

Dans certains modes de réalisation, l'étape de remplacement 305 peut aussi comprendre une étape de validation du remplacement d'une première partie de séquence par une seconde partie de séquence, en fonction d'une comparaison des contenus des deux parties des séquences.

Cette comparaison peut par exemple tenir compte de la qualité de définition de chacune des parties des séquences, d'une estimation d'un niveau de bruit visuel ou sonore, de l'équipement d'acquisition des flux multimédia ou encore d'un critère de maximalisation ou de limitation de l'écart entre les différents points de vue utilisés successivement par une séquence.

Ainsi, le point de vue (c'est à dire la géo-localisation fine) du terminal peut varier avec le temps, au cours de l'acquisition du flux. L'un des critères de validation du remplacement peut être de maximiser la distance entre les points de vue associés aux différentes séquences composant le flux optimisé, lors de la combinaison des vidéos.

Si par exemple 10 terminaux inscrits sont géo-localisés à différents points de vue vis-à-vis de la scène d'un spectacle, et que la durée de l'événement et la durée minimale de visualisation prédéfinie d'une séquence (voir ci-dessous) ne permettent que 3 remplacements successifs, la comparaison peut être basée sur la distance entre les différents points de vue, de façon à éviter de ne conserver que des séquences en provenance de 3 utilisateurs très proches les uns des autres (ce qui pourrait être le cas par un choix indépendant des points de vue).

Un autre critère peut consister à ne remplacer une partie de séquence que par une partie de séquence ayant un écart de point de vue limité par rapport à la première séquence, de façon à produire un flux confortable, visuellement, lors de sa diffusion.

De plus, dans certains modes de réalisation, éventuellement complémentaires, la comparaison tient compte également de la géolocalisation exacte d'un évènement (une scène par exemple), en fonction de la position respective des terminaux par rapport à la scène (et non seulement selon les distances entre les terminaux), de façon par exemple à ne pas utiliser de séquence provenant d'un terminal mal positionné par rapport à la scène (par exemple situé sur le côté de la scène ou trop éloigné de la scène). En particulier, des valeurs limites des positionnements d'un terminal, prédéfinies au moment de l'identification de l'événement, peuvent être utilisées pour « filtrer » les séquences.

Les flux de qualité et ou définition inférieure, ou trop faibles par rapport au premier flux, selon des barèmes prédéfinis, peuvent également ne pas être utilisés pour remplacer une partie d'une séquence du premier flux. A contrario, des séquences du premier flux de qualité et ou définition inférieure peuvent être remplacées par des séquences d'autres flux de meilleure qualité et ou définition.

L'étape de validation du remplacement peut également tenir compte d'autres critères, comme par exemple une durée minimale de visualisation d'une séquence (par exemple de l'ordre de quelques secondes), avant qu'elle puisse être remplacée en partie. Cette durée minimale permet de conserver au flux optimisé un caractère naturel et fluide, en particulier lorsque l'étape de remplacement 305 est mise en œuvre par un opérateur.

L'étape de validation du remplacement peut également privilégier les parties de séquences reçues d'un équipement professionnel, en particulier fourni par exemple par un organisateur de l'événement. Un tel mode de réalisation permet notamment de mixer des prises de vues professionnelles, par exemple des gros plans d'une scène ou d'un spectacle, avec celles de spectateurs.

Enfin, selon une variante de l'invention, par exemple lorsque l'inscription au service de traitement est offerte gratuitement à l'utilisateur, l'étape de remplacement 305 peut comprendre le remplacement de certaines séquences par des séquences publicitaires.

Dans certains modes particuliers de réalisation, l'étape de remplacement 305 est mise en œuvre périodiquement sur le premier flux. La période de remplacement peut notamment être définie de façon à tenir compte d'une durée minimale de visualisation sans remplacement d'une séquence ou partie de séquence, pour une fluidité de visualisation du flux.

Dans d'autres modes particuliers de réalisation de l'invention, éventuellement complémentaires aux modes de réalisation précités, l'étape de remplacement peut comprendre une étape d'homogénéisation du codage des deux parties de séquence, mise en œuvre avant la substitution des parties de séquences. Elle peut également comprendre, dans ce cas, une étape de ré-encodage du flux optimisé, de façon à ce que le flux optimisé possède le même codage que le premier flux.

Dans le mode de réalisation illustré en figure 3, le procédé comprend de plus une étape de diffusion 222 du flux multimédia optimisé, obtenu lors de l'étape de remplacement, vers au moins un terminal destinataire 230. Ce terminal destinataire peut en particulier avoir été déterminé, lors de l'étape de détection 104 d'un début de diffusion d'un flux vidéo, par exemple par l'application 102 installée sur le terminal 100.

Selon une variante de l'invention, le procédé peut être utilisé pour optimiser non pas un flux en cours d'acquisition, mais un flux déjà acquis par un terminal, par exemple un document vidéo, tel qu'un MMS vidéo, ou une pièce jointe adressée par l'utilisateur du terminal d'acquisition à un tiers.

### 5.4 Structure d'un terminal de communication adapté à la mise en œuvre du procédé de traitement, selon l'invention

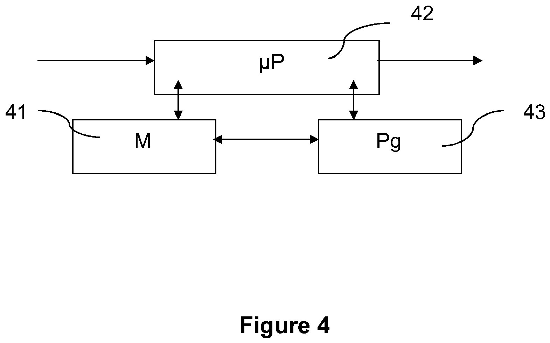

On présente, en relation avec la figure 4, la structure simplifiée d'un terminal de communication connectable à un réseau de communication.

Un tel terminal comprend une mémoire 41 comprenant une mémoire tampon, une unité de traitement 42, équipée par exemple d'un microprocesseur µP, et pilotée par un programme d'ordinateur 43, dont l'exécution met en œuvre un procédé de traitement selon l'invention.

A l'initialisation, les instructions de code du programme d'ordinateur 43 sont par exemple chargées dans une mémoire RAM avant d'être exécutées par le processeur de l'unité de traitement 42.

Le microprocesseur de l'unité de traitement 42 met en œuvre les étapes du procédé de traitement décrit précédemment, selon les instructions du programme d'ordinateur 43.

Le terminal de communication comprend ainsi, outre la mémoire tampon 41, des moyens :
- d'acquisition d'un flux multimédia relatif à un événement réel ;
- des moyens de découpage du flux, en une pluralité de séquences consécutives, à partir d'au moins une caractéristique de diffusion, associée à chacune desdites séquences ;
- des moyens d'émission de ladite pluralité de séquences composant ledit flux multimédia.

Ces moyens sont pilotés par le microprocesseur de l'unité de traitement 42.

### 5.5 Structure d'un serveur de communication adapté à la mise en œuvre du procédé de traitement, selon l'invention

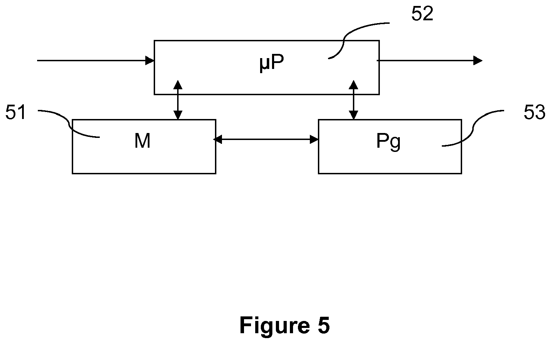

On présente, en relation avec la figure 5, la structure simplifiée d'un serveur de communication connectable à un réseau de communication.

Un tel serveur comprend une mémoire 51 comprenant une mémoire tampon, une unité de traitement 52, équipée par exemple d'un microprocesseur µP, et pilotée par un programme d'ordinateur 53, dont l'exécution met en œuvre un procédé de traitement selon l'invention.

A l'initialisation, les instructions de code du programme d'ordinateur 53 sont par exemple chargées dans une mémoire RAM avant d'être exécutées par le processeur de l'unité de traitement 52.

Le microprocesseur de l'unité de traitement 52 met en œuvre les étapes du procédé de traitement décrit précédemment, selon les instructions du programme d'ordinateur 53.

Le serveur de communication comprend ainsi, outre la mémoire tampon 51, des moyens de :
- réception d'un premier flux multimédia relatif à un événement réel, noté premier flux, diffusé par un terminal de communication ;
- découpage du premier flux multimédia, le premier flux étant découpé en une pluralité de séquences consécutives, à partir d'au moins une caractéristique de diffusion, associée à chacune desdites séquences

Ces moyens sont pilotés par le microprocesseur de l'unité de traitement 52.

Le serveur comprend des moyens supplémentaires de :
- remplacement, dans le premier flux reçu, d'au moins une partie d'une première séquence associée à une caractéristique de diffusion prédéterminée, par au moins une partie d'une deuxième séquence, d'un second flux reçu, le second flux multimédia étant relatif à l'évènement et distinct du premier flux, de même recouvrement temporel que la partie de la première séquence , la partie de la seconde séquence étant sélectionnée en fonction de la caractéristique de diffusion prédéterminée, générant un flux multimédia optimisé.

## Revendications

1. Procédé de traitement d'au moins un flux multimédia relatif à un événement réel, en cours d'acquisition ou acquis par un terminal de communication, noté premier flux, ledit procédé comprenant les étapes suivantes :
- découpage dudit premier flux, en une pluralité de séquences consécutives, à partir d'au moins une caractéristique de diffusion, associée à chacune desdites séquences, ledit découpage étant déclenché par la diffusion dudit premier flux par ledit terminal de communication, chacune des séquences étant associée à une caractéristique de diffusion appartenant au groupe comprenant :
∘ une caractéristique de diffusion définissant un caractère privé pour la séquence associée ; et
∘ une caractéristique de diffusion définissant un caractère public pour la séquence associée ;
pour au moins une desdites séquences, dite séquence donnée, la caractéristique de diffusion associée à ladite séquence donnée étant définie automatiquement, en tenant compte d'au moins une des informations appartenant au groupe comprenant :
∘ une caractéristique d'un moyen d'acquisition de ladite séquence donnée, compris dans ledit terminal de communication ;
∘ une caractéristique relative au contenu de ladite séquence donnée ; et
∘ une géo-localisation dudit terminal de communication et/ou d'un lieu de déroulement dudit événement ;
- remplacement, dans ledit premier flux, d'au moins une partie d'une première séquence associée à une caractéristique de diffusion prédéterminée par au moins une partie d'une deuxième séquence, identifiée à partir d'au moins une caractéristique de diffusion, d'au moins un second flux multimédia relatif audit évènement, ledit second flux étant distinct dudit premier flux, ladite au moins une partie de ladite deuxième séquence étant de même plage temporelle que ladite au moins une partie de ladite première séquence, ladite au moins une partie de ladite deuxième séquence étant sélectionnée en fonction de ladite caractéristique de diffusion prédéterminée associée à ladite première séquence, générant un flux multimédia optimisé,
et en ce qu'il comprend en outre une étape préalable d'identification dudit événement délivrant une information d'identification dudit événement comprenant au moins une délimitation temporelle et géographique dudit événement.

2. Procédé de traitement selon la revendication 1, **caractérisé en ce que** ladite caractéristique de diffusion associée à une séquence est définie à partir d'informations appartenant au groupe comprenant :
- un paramètre de prise de vue ;
- un paramètre de confidentialité en fonction d'une reconnaissance d'objet dans la séquence.

3. Procédé de traitement selon la revendication 1, **caractérisé en ce qu'**il comprend une étape préalable de prise en compte d'une inscription dudit terminal.

4. Procédé de traitement selon la revendication 3, **caractérisé en ce que** ladite inscription dudit terminal comprend au moins une information d'identification d'un évènement.

5. Procédé de traitement selon la revendication 1, **caractérisé en ce qu'**il comprend une étape de synchronisation temporelle dudit premier flux avec une base de temps de référence.

6. Procédé de traitement selon la revendication 1, **caractérisé en ce que** ladite étape de remplacement est mise en œuvre périodiquement sur ledit premier flux.

7. Procédé de traitement selon la revendication 1, **caractérisé en ce que** ladite étape de remplacement comprend une étape de validation du remplacement de ladite première partie par ladite seconde partie, fonction d'une comparaison des contenus desdites parties de séquence.

8. Procédé de traitement selon la revendication 1, **caractérisé en ce que** ladite étape de remplacement comprend une étape d'homogénéisation du codage de ladite partie de ladite deuxième séquence avec le codage de ladite partie de ladite première séquence.

9. Procédé de traitement selon la revendication 1, **caractérisé en ce qu'**il comprend en outre une étape de diffusion dudit flux multimédia optimisé vers au moins un terminal destinataire.

10. Serveur de traitement d'un flux multimédia relatif à un événement réel, noté premier flux, ledit serveur comprenant :
- des moyens de découpage dudit premier flux multimédia diffusé par un terminal de communication et reçu par ledit serveur de traitement, ledit premier flux étant découpé en une pluralité de séquences consécutives, à partir d'au moins une caractéristique de diffusion, associée à chacune desdites séquences, chacune des séquences étant associée à une caractéristique de diffusion appartenant au groupe comprenant :
∘ une caractéristique de diffusion définissant un caractère privé pour la séquence associée ; et
∘ une caractéristique de diffusion définissant un caractère public pour la séquence associée ;
pour au moins une desdites séquences, dite séquence donnée, la caractéristique de diffusion associée à ladite séquence donnée étant définie automatiquement, en tenant compte d'au moins une des informations appartenant au groupe comprenant :
∘ une caractéristique d'un moyen d'acquisition de ladite séquence donnée, compris dans ledit terminal de communication ;
∘ une caractéristique relative au contenu de ladite séquence donnée ; et
∘ une géo-localisation dudit terminal de communication et/ou d'un lieu de déroulement dudit événement ;
- des moyens de remplacement, dans ledit premier flux reçu, d'au moins une partie d'une première séquence associée à une caractéristique de diffusion prédéterminée, par au moins une partie d'une deuxième séquence, d'un second flux reçu, ledit second flux multimédia étant relatif audit évènement et distinct dudit premier flux, de même recouvrement temporel que ladite au moins une partie de ladite première séquence , ladite au moins une partie de ladite deuxième séquence étant sélectionnée en fonction de ladite caractéristique de diffusion prédéterminée associée à ladite première séquence, générant un flux multimédia optimisé,
et en ce qu'il comprend en outre des moyens d'identification préalable dudit événement délivrant une information d'identification dudit événement comprenant au moins une délimitation temporelle et géographique dudit événement.

11. Programme d'ordinateur **caractérisé en ce qu'**il comprend des instructions de code de programme pour la mise en œuvre d'un procédé de traitement, selon l'une quelconque des revendications 1 à 9, lorsque ce programme est exécuté par un processeur.

## Patentansprüche

1. Verfahren zur Verarbeitung mindestens eines Multimediaflusses in Bezug auf ein reales Ereignis, der durch ein Kommunikationsendgerät gerade erfasst wird oder erfasst wurde, als erster Fluss bezeichnet, wobei das Verfahren die folgenden Schritte beinhaltet:
- Zerlegen des ersten Flusses in eine Vielzahl von aufeinanderfolgenden Sequenzen auf Basis mindestens eines Weitergabemerkmals, das mit jeder der Sequenzen assoziiert ist, wobei das Zerlegen durch die Weitergabe des ersten Flusses durch das Kommunikationsendgerät ausgelöst wird, wobei jede der Sequenzen mit einem Weitergabemerkmal assoziiert ist, das zu der Gruppe gehört, die Folgendes beinhaltet:
∘ ein Weitergabemerkmal, das einen privaten Charakter für die assoziierte Sequenz definiert; und
∘ ein Weitergabemerkmal, das einen öffentlichen Charakter für die assoziierte Sequenz definiert;
wobei für mindestens eine der Sequenzen, als gegebene Sequenz bezeichnet, das mit der gegebenen Sequenz assoziierte Weitergabemerkmal automatisch definiert wird, unter Berücksichtigung mindestens einer der Informationen, die zu der Gruppe gehören, die Folgendes beinhaltet:
∘ ein Merkmal eines Erfassungsmittels der gegebenen Sequenz, das in dem Kommunikationsendgerät enthalten ist;
∘ ein Merkmal in Bezug auf den Inhalt der gegebenen Sequenz; und
∘ eine Geolokalisierung des Kommunikationsendgeräts und/oder eines Durchführungsortes des Ereignisses;
- Ersetzen, in dem ersten Fluss, mindestens eines Teils einer ersten Sequenz, die mit einem vorgegebenen Weitergabemerkmal assoziiert ist, durch mindestens einen Teil einer zweiten Sequenz, die auf Basis mindestens eines Weitergabemerkmals identifiziert wird, mindestens eines zweiten Multimediaflusses in Bezug auf das Ereignis, wobei sich der zweite Fluss von dem ersten Fluss unterscheidet, wobei der mindestens eine Teil der zweiten Sequenz den gleichen zeitlichen Bereich wie der mindestens eine Teil der ersten Sequenz aufweist, wobei der mindestens eine Teil der zweiten Sequenz in Abhängigkeit von dem vorgegebenen Weitergabemerkmal, das mit der ersten Sequenz assoziiert ist, ausgewählt wird, sodass ein optimierter Multimediafluss generiert wird, und dadurch, dass es ferner einen vorausgehenden Schritt der Identifikation des Ereignisses beinhaltet, der eine Identifikationsinformation über das Ereignis liefert, die mindestens eine zeitliche und geographische Begrenzung des Ereignisses beinhaltet.

2. Verarbeitungsverfahren nach Anspruch 1, **dadurch gekennzeichnet, dass** das mit einer Sequenz assoziierte Weitergabemerkmal auf Basis von Informationen definiert wird, die zu der Gruppe gehören, die Folgendes beinhaltet:
- einen Aufnahmeparameter;
- einen Vertraulichkeitsparameter in Abhängigkeit von einer Objekterkennung in der Sequenz.

3. Verarbeitungsverfahren nach Anspruch 1, **dadurch gekennzeichnet, dass** es einen vorausgehenden Schritt der Berücksichtigung einer Registrierung des Endgeräts beinhaltet.

4. Verarbeitungsverfahren nach Anspruch 3, **dadurch gekennzeichnet, dass** die Registrierung des Endgeräts mindestens eine Identifikationsinformation eines Ereignisses beinhaltet.

5. Verarbeitungsverfahren nach Anspruch 1, **dadurch gekennzeichnet, dass** es einen Schritt der zeitlichen Synchronisierung des ersten Flusses mit einer Referenzzeitbasis beinhaltet.

6. Verarbeitungsverfahren nach Anspruch 1, **dadurch gekennzeichnet, dass** der Schritt des Ersetzens periodisch an dem ersten Fluss vorgenommen wird.

7. Verarbeitungsverfahren nach Anspruch 1, **dadurch gekennzeichnet, dass** der Schritt des Ersetzens einen Schritt des Validierens des Ersetzens des ersten Teils durch den zweiten Teil in Abhängigkeit von einem Vergleich der Inhalte der Sequenzteile beinhaltet.

8. Verarbeitungsverfahren nach Anspruch 1, **dadurch gekennzeichnet, dass** der Schritt des Ersetzens einen Schritt des Homogenisierens der Codierung des Teils der zweiten Sequenz mit der Codierung des Teils der ersten Sequenz beinhaltet.

9. Verarbeitungsverfahren nach Anspruch 1, **dadurch gekennzeichnet, dass** es ferner einen Schritt der Weitergabe des optimierten Multimediaflusses an mindestens ein Empfängerendgerät beinhaltet.

10. Server zur Verarbeitung eines Multimediaflusses in Bezug auf ein reales Ereignis, als erster Fluss bezeichnet, wobei der Server Folgendes beinhaltet:
- Mittel zum Zerlegen des ersten Multimediaflusses, der durch ein Kommunikationsendgerät weitergegeben und durch den Verarbeitungsserver empfangen wird, wobei der erste Fluss auf Basis mindestens eines Weitergabemerkmals, das mit jeder der Sequenzen assoziiert ist, in eine Vielzahl von aufeinanderfolgenden Sequenzen zerlegt wird, wobei jede der Sequenzen mit einem Weitergabemerkmal assoziiert ist, das zu der Gruppe gehört, die Folgendes beinhaltet:
∘ ein Weitergabemerkmal, das einen privaten Charakter für die assoziierte Sequenz definiert; und
∘ ein Weitergabemerkmal, das einen öffentlichen Charakter für die assoziierte Sequenz definiert;
wobei für mindestens eine der Sequenzen, als gegebene Sequenz bezeichnet, das mit der gegebenen Sequenz assoziierte Weitergabemerkmal automatisch definiert wird, unter Berücksichtigung mindestens einer der Informationen, die zu der Gruppe gehören, die Folgendes beinhaltet:
∘ ein Merkmal eines Erfassungsmittels der gegebenen Sequenz, das in dem Kommunikationsendgerät enthalten ist;
∘ ein Merkmal in Bezug auf den Inhalt der gegebenen Sequenz; und
∘ eine Geolokalisierung des Kommunikationsendgeräts und/oder eines Durchführungsortes des Ereignisses;
- Mittel zum Ersetzen, in dem empfangenen ersten Fluss, mindestens eines Teils einer ersten Sequenz, die mit einem vorgegebenen Weitergabemerkmal assoziiert ist, durch mindestens einen Teil einer zweiten Sequenz eines empfangenen zweiten Flusses, wobei sich der zweite Multimediafluss auf das Ereignis bezieht und sich von dem ersten Fluss unterscheidet, mit der gleichen zeitlichen Abdeckung wie der mindestens eine Teil der ersten Sequenz, wobei der mindestens eine Teil der zweiten Sequenz in Abhängigkeit von dem vorgegebenen Weitergabemerkmal, das mit der ersten Sequenz assoziiert ist, ausgewählt wird, sodass ein optimierter Multimediafluss generiert wird, und dadurch, dass er ferner Mittel zur vorausgehenden Identifikation des Ereignisses beinhaltet, die eine Identifikationsinformation über das Ereignis liefern, die mindestens eine zeitliche und geographische Begrenzung des Ereignisses beinhaltet.

11. Computerprogramm, **dadurch gekennzeichnet, dass** es Programmcodeanweisungen zur Umsetzung eines Verarbeitungsverfahrens nach einem der Ansprüche 1 bis 9 beinhaltet, wenn dieses Programm durch einen Prozessor ausgeführt wird.

## Claims

1. Method for processing at least one multimedia stream relative to a real event, in the course of acquisition or acquired by a communication terminal, denoted the first stream, said method comprising the following steps:
- dividing said first stream into a plurality of consecutive sequences on the basis of at least one transmission characteristic associated with each of said sequences, said division being triggered by the transmission of said first stream by said communication terminal, each of the sequences being associated with a transmission characteristic belonging to the group comprising:
∘ a transmission characteristic defining that the associated sequence is of private character; and
∘ a transmission characteristic defining that the associated sequence is of public character;
for at least one of said sequences, called the given sequence, the transmission characteristic associated with said given sequence being defined automatically, taking into account at least one of the information items belonging to the group comprising:
∘ a characteristic of a means for acquiring said given sequence, which means is comprised in said communication terminal;
∘ a characteristic relative to the content of said given sequence; and
∘ a geo-location of said communication terminal and/or a site of occurrence of said event;
- replacing, in said first stream, at least one portion of a first sequence that is associated with a predetermined transmission characteristic with at least one portion of a second sequence, which is identified on the basis of at least one transmission characteristic, of at least one second multimedia stream relative to said event, said second stream being distinct from said first stream, said at least one portion of said second sequence being of the same time range as said at least one portion of said first sequence, said at least one portion of said second sequence being selected depending on said predetermined transmission characteristic associated with said first sequence, generating an optimized multimedia stream,
and in that it furthermore comprises a prior step of identifying said event, delivering information identifying said event comprising at least one temporal and geographic delineation of said event.

2. Processing method according to Claim 1, **characterized in that** said transmission characteristic associated with a sequence is defined on the basis of information items belonging to the group comprising:
- an image-capture parameter;
- a confidentiality parameter dependent on recognition of an object in the sequence.

3. Processing method according to Claim 1, **characterized in that** it comprises a prior step of taking into account a registration of said terminal.

4. Processing method according to Claim 3, **characterized in that** said registration of said terminal comprises at least one information item identifying an event.

5. Processing method according to Claim 1, **characterized in that** it comprises a step of temporally synchronizing said first stream with a reference time base.

6. Processing method according to Claim 1, **characterized in that** said replacing step is implemented periodically on said first stream.

7. Processing method according to Claim 1, **characterized in that** said replacing step comprises a step of validating the replacement of said first portion with said second portion, depending on a comparison of the contents of said sequence portions.

8. Processing method according to Claim 1, **characterized in that** said replacing step comprises a step of making the coding of said portion of said second sequence homogeneous with the coding of said portion of said first sequence.

9. Processing method according to Claim 1, **characterized in that** it furthermore comprises a step of transmitting said optimized multimedia stream to at least one recipient terminal.

10. Server for processing a multimedia stream relative to a real event, denoted the first stream, said server comprising:
- means for dividing said first multimedia stream transmitted by a communication terminal and received by said processing server, said first stream being divided into a plurality of consecutive sequences on the basis of at least one transmission characteristic associated with each of said sequences, each of the sequences being associated with a transmission characteristic belonging to the group comprising:
∘ a transmission characteristic defining that the associated sequence is of private character; and
∘ a transmission characteristic defining that the associated sequence is of public character;
for at least one of said sequences, called the given sequence, the transmission characteristic associated with said given sequence being defined automatically, taking into account at least one of the information items belonging to the group comprising:
∘ a characteristic of a means for acquiring said given sequence, which means is comprised in said communication terminal;
∘ a characteristic relative to the content of said given sequence; and
∘ a geo-location of said communication terminal and/or a site of occurrence of said event;
- means for replacing, in said received first stream, at least one portion of a first sequence that is associated with a predetermined transmission characteristic with at least one portion of a second sequence, of a received second stream, said second multimedia stream being relative to said event and distinct from said first stream, but of same temporal overlap as said at least one portion of said first sequence, said at least one portion of said second sequence being selected depending on said predetermined transmission characteristic associated with said first sequence, generating an optimized multimedia stream, and in that it furthermore comprises means for identifying beforehand said event, delivering information identifying said event comprising at least one temporal and geographic delineation of said event.

11. Computer program **characterized in that** it comprises program-code instructions for implementing a processing method, according to any one of Claims 1 to 9, when this program is executed by a processor.
